# EUROPEAN PATENT APPLICATION

(11) **EP 4 848 747 A1**
(43) Date of publication of application: **02.12.2026**
(21) Application number: 26180897.6
(22) Date of filing: 26.05.2026
(51) Int. Cl.: H04N 25/53, H04N 25/57, H04N 25/773

(54) **PHOTOELECTRIC CONVERSION SYSTEM, CONTROL SYSTEM, AND STORAGE MEDIUM**

(30) Priority: 30.05.2025 JP 2025090624
(71) Applicant: Canon Kabushiki Kaisha, Tokyo 146-8501 (JP)
(72) Inventor: TAKAHATA, Kotaro, Ohta-ku, Tokyo, 146-8501 (JP)
(74) Representative: TBK

(57) **Abstract**

A photoelectric conversion system has a photoelectric conversion element for generating photon detection signals by avalanche multiplication; a counter circuit for counting the photon detection signals that are output from the photoelectric conversion element; and a timing generation unit for generating a pulse signal for increasing a count value for the counter circuit along with the progression of time in a plurality of second exposure periods that are shorter than a first exposure period corresponding to one frame, wherein state acquisition processing is performed for acquiring state information relating to at least a part or surroundings of the photoelectric conversion system, and changing, according to the state information, a cycle of at least one of the second exposure periods, and a number of the pulse signals that are included in the second exposure periods.

## Description

### TECHNICAL FIELD

The present disclosure relates to a photoelectric conversion system, a control method, a storage medium, and the like.

### BACKGROUND

A photoelectric conversion apparatus is known that is able to detect incredibly weak light at the level of a single photon using avalanche multiplication. United States Patent Application, Publication No. 2017/0186798 discloses a photoelectric conversion apparatus in which both a sensor chip on which a plurality of pixels has been arranged and a circuit chip on which a circuit that performs signal processing has been formed are electrically connected to each other in a laminated structure. It is disclosed that the pixels inside of the sensor chip in this photoelectric conversion apparatus use avalanche photodiodes in which electrical charges cause avalanche multiplication.

A photoelectric conversion apparatus that is able to detect incredibly weak light at the level of a single photon is known. Japanese Unexamined Patent Application, First Publication No. 2025-009969 discloses a photoelectric conversion apparatus that is provided with an avalanche photodiode, a waveform shaping circuit configured to shape output waveforms of the avalanche photodiode, and a counter that generates counting results in which signals that are output from the waveform shaping circuit have been counted. The photoelectric conversion apparatus of Japanese Unexamined Patent Application, First Publication No. 2025-009969 discloses a mode of a weighted counting method in which the weighting of the count is changed according to the timing of the incidence of the photons.

In addition, in Japanese Unexamined Patent Application, First Publication No. 2025-009969 a large number of subframe periods into which a frame period has been divided are set, and by changing the weighting according to the timing at which the photons become incident during a subframe period, and counting the photons, it is possible to increase the SNR of the images.

However, in a case in which photon counting has been performed by a weighted counting method by using the technology of Japanese Unexamined Patent Application, First Publication No. 2025-009969, a plurality of subframe periods is provided during one frame period, and therefore, there is a possibility that avalanche multiplication will frequently occur.

If avalanche multiplication frequently occurs, the power consumption of the sensor chip for the photoelectric conversion apparatus will greatly increase, and there is a possibility that the sensor chip will generate a high temperature. If the sensor chip generates a high temperature, there are the concerns that particularly in dark places, the performance will degrade due to increases in the amount of dark random noise, and if the temperature of the sensor chip exceeds an operation guarantee temperature, that it will be difficult for the photoelectric conversion apparatus to operate, and it is necessary to prevent the generation of high temperatures in the photoelectric conversion apparatus.

In this context, for example, heat dissipation by a thermal conduction member, and energy consumption reduction of the image processing apparatus are given as examples of high temperature generation prevention measures for a photoelectric conversion apparatus. However, heat dissipation by a thermal conduction member causes the concern that equipping the photoelectric conversion apparatus with a thermal conductor may increase the size and the cost thereof.

Therefore, power consumption reduction for the photoelectric conversion apparatus is desirable as a high heat generation prevention measure for the photoelectric conversion apparatus. In addition, although it is possible to decrease energy consumption by decreasing the number of subframe periods that are provided during one frame period, this decreases the dynamic range of the weighted counting method.

### SUMMARY

A photoelectric conversion system according to one embodiment of the present disclosure has a photoelectric conversion element configured to generate photon detection signals by avalanche multiplication; a counter circuit configured to count the photon detection signals that are output from the photoelectric conversion element; and a timing generation unit configured to generate a pulse signal for increasing a count value for the counter circuit along with the progression of time in a plurality of second exposure periods that are shorter than a first exposure period that corresponds to one frame; wherein state acquisition processing for acquiring state information relating to a state of at least a part or surroundings of the photoelectric conversion system, and control processing for changing, according to the state information, a cycle of at least one of the second exposure periods, and a number of the pulse signals that are included in the second exposure periods are performed.

Further features of the present disclosure will become apparent from the following description of embodiments with reference to the attached drawings.

### BRIEF DESCRIPTION OF THE DRAWINGS

FIG. 1 is a schematic diagram of a photoelectric conversion apparatus according to an embodiment.
FIG. 2 is a schematic diagram of a sensor chip for a photoelectric conversion apparatus according to an embodiment.
FIG. 3 is a schematic diagram of a circuit chip for a photoelectric conversion apparatus according to an embodiment.
FIG. 4 is a configurational example of a pixel circuit for a photoelectric conversion apparatus according to an embodiment.
FIGS. 5A to 5C are schematic diagrams showing drive of a pixel circuit of a photoelectric conversion apparatus according to an embodiment.
FIGS. 6A to 6C are diagrams explaining principles relating to the present disclosure.
FIG. 7 is a diagram showing a configurational example of a pixel circuit of a photoelectric conversion apparatus according to a normal weighted counting method.
FIG. 8 is a timing chart for a photoelectric conversion apparatus according to a normal weighted counting method.
FIG. 9 is a diagram showing a configurational example of a pixel circuit for a photoelectric conversion apparatus according to a modification example of a normal weighted counting method.
FIG. 10 is timing chart for a photoelectric conversion apparatus according to a modification example of a normal weighted counting method.
FIG. 11 is a functional block diagram showing a schematic configurational example of a photoelectric conversion system 1000 according to a First Embodiment.
FIG. 12 is a flowchart showing an example of a processing flow for a control method for the photoelectric conversion system 1000 according to the First Embodiment.
FIG. 13 is a timing chart showing an example of operational timing during step S104.
FIG. 14 is a flowchart showing an example of an operational flow for a photoelectric conversion system according to a Second Embodiment.
FIG. 15 is a diagram showing an output image example for the photoelectric conversion system according to the Second Embodiment.

### DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate descriptions will be omitted or simplified.

Below, a mode of the present disclosure will be explained in detailed based on the attached diagrams. Note that in the following explanation, terms will be used that indicate specific directions and positions according to necessity (for example "up", "down", "right", "left", and other terms that are derived from these terms). The use of these terms is in order to facilitate an understanding of the embodiments in reference to the figures, and the technical scope of the present disclosure is not limited by the meanings of these terms.

In the present specification, a planar view refers to viewing an object from a direction that is perpendicular in relation to an incidence surface of a semiconductor layer. In addition, a cross-section view refers to viewing a surface in a direction that is perpendicular to the incidence surface of a semiconductor layer. Note that in a case in which the incidence surface of a semiconductor layer is a rough surface when seen microscopically, the planar view is defined based on the incidence surface of the semiconductor layer when seen macroscopically.

In the following explanation, the anode of the avalanche photodiode (APD) is made a fixed electric potential, and a signal is retrieved from the cathode side. Therefore, a first conductivity type semiconductor region in which a polarity charge that is the same as the signal charge is made the majority carrier is an N-type semiconductor region, and a second conductivity type semiconductor region in which a polarity charge that is different than the signal charge is made the majority carrier is a P-type semiconductor region.

Note that the present disclosure is still valid even in a case in which the cathode of the APD is made a fixed electric potential, and a signal is retrieved from the anode side. In this case, a first conductivity type semiconductor region in which a polarity charge that is the same as the signal charge is made the majority carrier is the P-type semiconductor region, and a second conductivity type semiconductor region in which a polarity charge that is different than the signal charge is made the majority carrier is the N-type semiconductor region. Although below, a case is explained in which one node of the APD is made a fixed electric potential, it may also be made such that the potentials of both nodes vary.

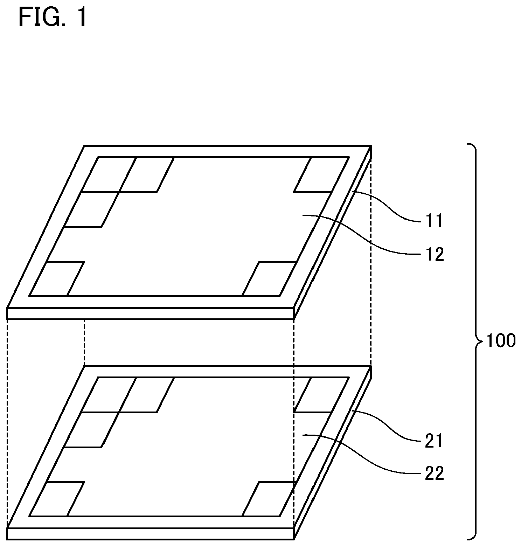

The shared configurations of each embodiment of the photoelectric conversion apparatus according to the present disclosure and the drive method thereof will be explained using FIG. 1 to FIG. 5.

FIG. 1 is a diagram showing a configuration of a laminated photoelectric conversion apparatus according to an embodiment of the present disclosure. A photoelectric conversion apparatus 100 is configured by two chips, a sensor chip 11 and a circuit chip 21, being laminated and electrically connected to each other. A pixel region 12 is disposed on the sensor chip 11, and a circuit region 22 in which processing is performed on a signal that has been detected in the pixel region 12 is disposed on the circuit chip 21.

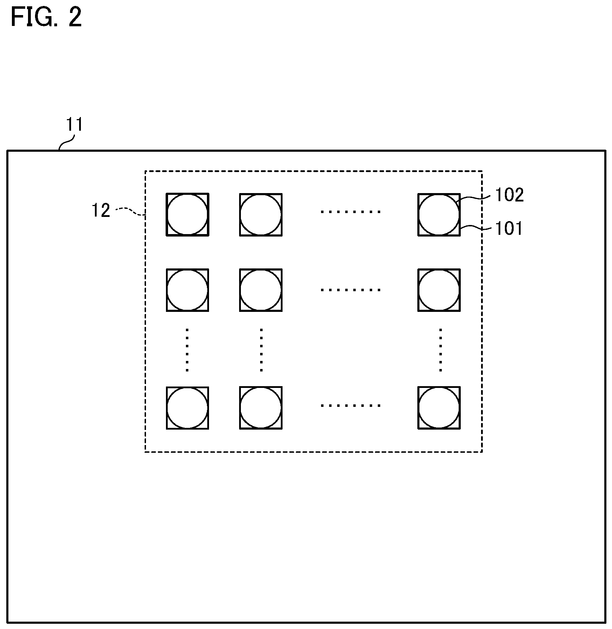

FIG. 2 is an arrangement diagram of the sensor chip 11. Pixels 101 that have photoelectric conversion units 102 comprising APDs are arranged in an array of a plurality of rows and a plurality of columns and form the pixel region 12. Although the pixels 101 are typically pixels for forming an image, for example, in a case in which a distance measurement operation such as a Time of Flight (TOF) method is used, the pixels do not necessarily need to form an image. That is, the pixels 101 may also be pixels for measuring a time at which light has reached the pixels, and a light amount.

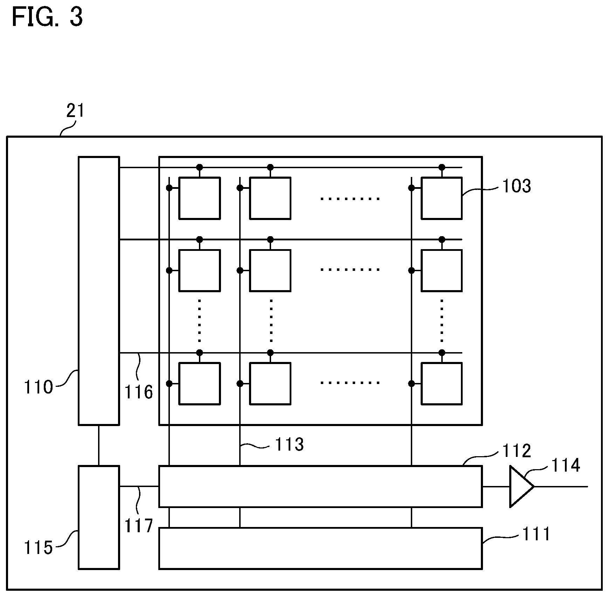

FIG. 3 is a configurational diagram of the circuit chip 21. The circuit chip 21 has a signal processing unit 103 that processes the charges that were photoelectrically converted in the photoelectric conversion unit 102 of FIG. 2, a readout circuit 112, a control pulse generating unit 115, a horizontal scanning circuit unit 111, an output line 113, and a vertical scanning circuit unit 110.

The photoelectric conversion unit 102 of FIG. 2 and the signal processing unit 103 of FIG. 3 are electrically connected via connecting wiring that has been provided for each pixel.

The vertical scanning circuit unit 110 receives a control pulse that has been supplied from the control pulse generating unit 115, and provides the control pulse to each pixel. The vertical scanning circuit unit 110 uses a logical circuit of a shift resistor and an address decoder.

The signals that have been output from the photoelectric conversion units 102 of each pixel are processed in the signal processing unit 103. The signal processing unit 103 is provided with a counter, a memory, and the like, and digital values are held in the memory.

The horizontal scanning circuit unit 111 inputs a control pulse that sequentially selects each column to the signal processing unit 103 in order to read out signals from the memories for each pixel in which digital signals have been held.

The output line 113 outputs signals from the signal processing unit 103 for the pixel that has been selected by the vertical scanning circuit unit 110 based on the column that has been selected.

The signal that has been output by the output line 113 is output via the output circuit 114 to a recording unit and a signal processing unit that are external to the photoelectric conversion apparatus 100.

Although in FIG. 2, the pixels in the pixel region 12 are arranged in a two-dimensional array, the present disclosure is not limited thereto. For example, the arrangement of the pixels 101 in the pixel region 12 may also be arranged 1-dimensionally.

The functions of the signal processing unit 103 do not necessarily need to be provided to all of the individual pixels 101, and for example, it may also be made such that the signal processing unit 103 is shared by a plurality of pixels 101, and sequential signal processing is performed.

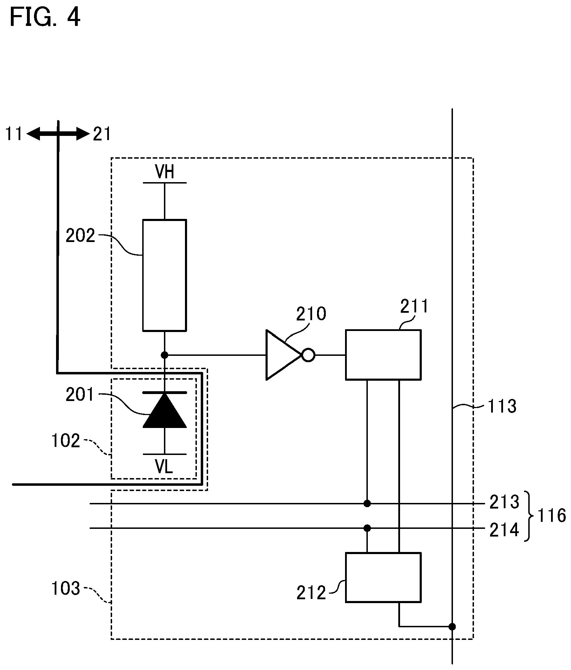

FIG. 4 is one example of a block diagram including equivalent circuits for FIG. 2, and FIG. 3. In FIG. 2, the photoelectric conversion unit 102 that is had by an APD 201 that is shown in FIG. 4 is provided to the sensor chip 11, and the other members are provided to the circuit chip 21.

The APD 201 generates a charge pair according to incident light by photelectric conversion. The anode of the APD 201 is supplied with a voltage VL (a first voltage). In addition, the cathode of the APD 201 is provided with a voltage VH (a second voltage) that is higher than the voltage VL that is supplied to the anode.

The anode and the cathode are supplied with reverse bias voltages such that the APD 201 performs avalanche multiplication operations. By having a state in which the voltages are supplied in such a manner, the charge that is generated by incident light causes avalanche multiplication, and an avalanche current is generated.

Note that in a case in which a reverse bias voltage is supplied, there is a Geiger mode in which the APD 201 is operated at a voltage difference between the anode and the cathode that is greater than the breakdown voltage, and a linear mode, in which the APD 201 is operated at a voltage difference between the anode and the cathode that is near or below the breakdown voltage. Hereinafter, an APD that is being operated in the Geiger mode may be referred to as a SPAD. In the SPAD, for example, the voltage VL (first voltage) is -30 V, and the voltage VH (second voltage) is 1 V.

The signal processing unit 103 has a quenching element 202, a waveform shaping unit 210, a counter circuit 211, and a selection circuit 212. In the present specification, it is sufficient if the signal processing unit 103 has at least one of the quenching element 202, the waveform shaping unit 210, the counter circuit 211, and the selection circuit 212.

The quenching element 202 is connected to a power source that supplies the voltage VH, and to the APD 201. The quenching element 202 is configured by a resistor element such as a MOS transistor, a poly resistor, and the like. When an electrical current is multiplied in the APD 201 by avalanche multiplication, the current that is obtained by the charge that has been multiplied is flowed in the connection node for between the APD 201 and the quenching element 202.

The voltage drop caused by this current causes the potential of the cathode of the APD 201 to decrease, and the APD 201 stops forming electronic avalanches. The avalanche multiplication of the APD 201 is thereby stopped.

After this, the voltage VH is supplied to the cathode of the APD 201 via the quenching element 202, and therefore, the voltage that is supplied to the cathode of the APD 201 returns to the voltage VH. That is, the operating region of the APD 201 once again enters Geiger mode operation.

In this manner, the quenching element 202 functions as a load circuit (a quenching circuit) at the time of signal multiplication caused by avalanche multiplication, and has an operation that suppresses the voltage that is supplied to the APD 201 and suppresses the avalanche multiplication (a quenching operation). In addition, the quenching element 202 has a function that makes the operational regional of the APD 201 once again enter Geiger mode after the avalanche multiplication has been suppressed.

The waveform shaping unit 210 shapes the potential changes of the cathode of the APD 201 that are obtained at the time of photon detection, and outputs a pulse signal. For example, an inverter circuit can be used as the waveform shaping unit 210.

Although in FIG. 4, an example has been shown in which one inverter is used as the waveform shaping unit 210, a circuit in which a plurality of inverters have been serially connected may also be used, and another type of circuit that has a waveform shaping effect may also be used.

The counter circuit 211 counts the pulse signals that have been output from the waveform shaping unit 210 and holds count values. In addition, when a control pulse pRES has been supplied via a drive line 213, the signal that has been held in the counter circuit 211 is reset.

The selection circuit 212 is supplied a control pulse pSEL via a drive line 214 of FIG. 4 from the vertical scanning circuit unit 110 of FIG. 1, and switches the counter circuit 211 and the output line 113 between a state in which the counter circuit 211 and the output line 113 are electrically connected, and a state in which the counter circuit 211 and the output line 113 are not connected. The selection circuit 212 includes, for example, a buffer circuit for outputting signals.

It may also be made such that switches such as a transistor and the like are placed between the quenching element 202 and the APD 201, and between the photoelectric conversion unit 102 and the signal processing unit 103, and the electric connection between the quenching element 202 and the APD 201, and the electric connection between photoelectric conversion unit 102 and the signal processing unit 103 are switched on and off. In the same manner, the supply of the voltage VL that is supplied to the APD 201 may also be electrically switched on and off using a switch such as a transistor and the like.

In the present embodiment, a configuration that uses the counter circuit 211 has been shown. However, instead of the counter circuit 211, a time/digital conversion circuit (Time to Digital Converter, below a TDC), and a memory may be used, and the photoelectric conversion apparatus 100 may be made to acquire the pulse detection timing.

At this time, the generation timing for the pulse signal that has been output from the waveform shaping unit 210 is converted into a digital signal by the TDC. The TDC is supplied with a control pulse pREF (a reference signal) via the drive line from the vertical scanning circuit unit 110 of FIG. 1 during the measurement of the timing of the pulse signal.

The TDC uses the control pulse pREF as a reference, and acquires the signal from when the input timings of the signals that have been output from each pixel have been made a relative time period to serve as the digital signal via the waveform shaping unit 210.

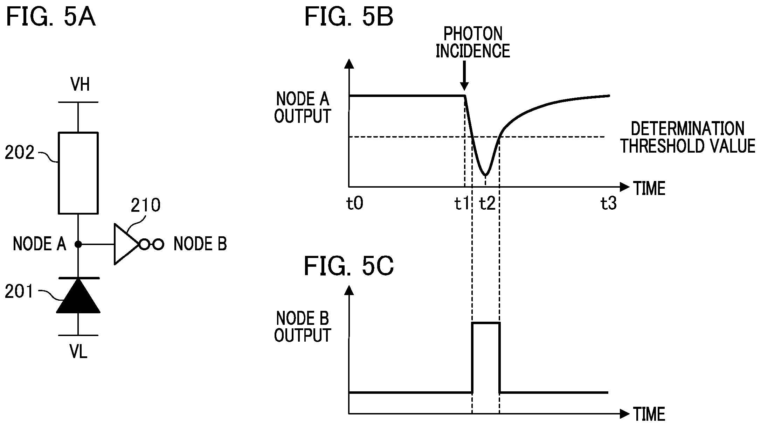

FIG. 5 is a diagram that schematically shows the relationship between the operations of the APD and the output signal. FIG. 5A is a diagram that excerpts the APD 201, the quenching element 202, and the waveform shaping unit 210 from FIG. 2. In this context, the input side of the waveform shaping unit 210 has been made a node A, and the output side has been made a node B. FIG. 5B shows the waveform changes for the node A of FIG. 5A, and FIG. 5C shows the waveform changes for the node B of FIG. 5A.

During the period from the time t0 to the time t1, the potential difference VH - VL is applied to the APD 201 of FIG. 5A.

During the time t1, when a photon becomes incident, an avalanche multiplication current is flowed through the quenching element 202, and the voltage of the node A drops. If the voltage drop amount further increases, and the voltage difference that is applied to the APD 201 becomes smaller, the avalanche multiplication in the APD 201 stops, and it becomes such that the voltage level of the node A will not fall by an amount that is greater than or equal to a fixed value. After this, a current that compensates the voltage drop amount from the voltage VH is flowed in the node A, and during the time t3, the node A becomes static at the previous potential level.

At this time, the portion of the output waveform in the node A that has exceeded a specific threshold value is waveform shaped in the waveform shaping unit 210, and output in the node B as a signal.

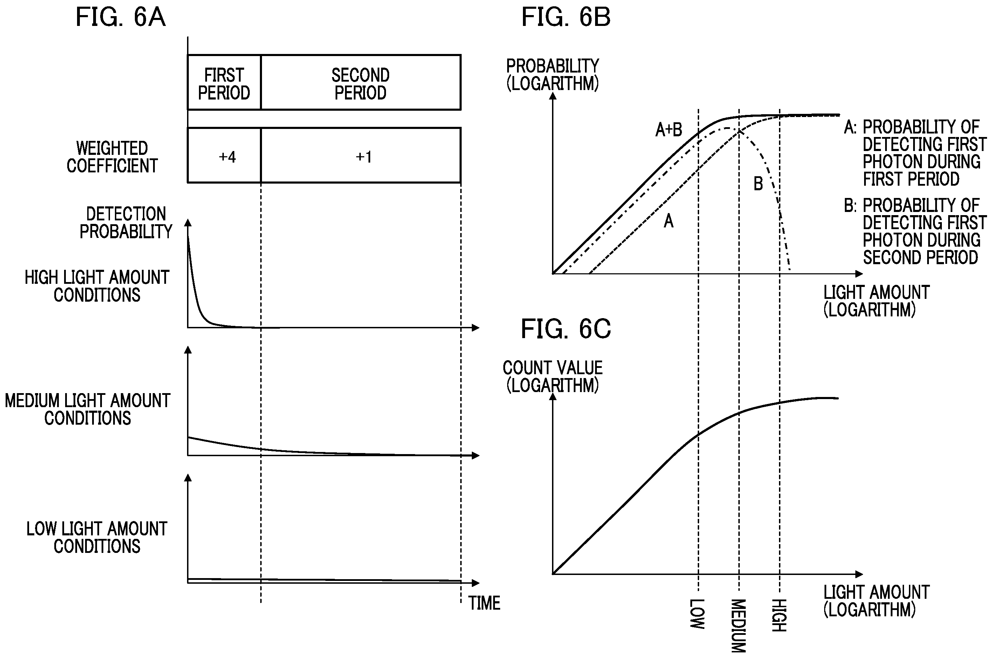

The principle for the weighted counting method will be explained using FIG. 6. In this context, FIG. 6A is a diagram showing examples of the detection probabilities for a first photon during a time period under each light amount condition, as well as a weighted coefficient for each period.

FIG. 6B is a graph showing the probability of photon detection in relation to the light amount. FIG. 6C is a graph showing the count number for the photon detection signal in relation to the light amount. In this context, the photon that is initially detected during each detection period is referred to as the first photon.

As is shown in FIG. 6A, under high light amount conditions, the probability of detecting the first photon is high at an early time, and the probability of detection lowers along with the passage of time. When the detection period has been divided into two periods, with first half of the detection period being the first period, and the second half of the detection period being the second half, there is a high probability that the detection of the first photon will be completed during the first period.

Although the photon detection probability does decrease along with the passage of time under medium light amount conditions as well, in comparison with the case of a high light amount, the time dependency for the first photon detection probability is low, and there is a possibility that the first photon will be detected even during the second period. Under low light amount conditions, the detection probability for the first photon hardly depends on the time at all.

In FIG. 6B, the broken line A represents the probability of detecting the first photon during the first period under each light amount, and the broken line B represents the probability of detecting the first photon during the second period under each light amount. The straight line A + B, which combines the broken line A and the broken line B, represents the probability of detecting the first photon under each light amount regardless of the period.

As is shown by the broken line A, during the first period, the larger the amount of light, the higher that the probability of detecting the first photon becomes, and under high light conditions saturation quickly occurs. In particular, from the low light amount conditions to the medium light amount conditions, the probability increases exponentially in relation to increases in the light amount.

In contrast, as is shown by the broken line B, during the second period, from the low light amount conditions to the medium light amount conditions, the larger the light amount becomes, the higher that the probability of detecting the photon becomes, and from the medium light amount conditions to the low light amount conditions, the probability of detecting the photon decreases. This is because under the high light amount conditions, in most cases the first photon is detected during the first period, and the photons that are detected during the second period are photons that have become incident after the first photon.

As is shown by the straight line A + B, which combines the broken line A and the broken line B, the probability of detecting the first photon under each light amount becomes higher the larger the amount of light becomes from the low light amount conditions to the medium light amount conditions, and the probability converges at a fixed value from the medium light amount conditions to the high light amount conditions.

FIG. 6C shows a graph for the count values under each light amount. In the same manner as the detection probability for the first photon shown in FIG. 6B, the second photon and the subsequent photons become incident on the APD. That is, from the low light amount conditions to the medium light amount conditions, the larger that the light amount becomes the higher that the photon count number becomes, and from the medium light amount conditions to the high light amount conditions, the count value becomes saturated as the light amount becomes higher.

Under the high light amount conditions, the count value increase amount and the incident photon number increase amount do not have a one-to-one correspondence, and it is also possible for the weighting to increase by one count amount for the count value.

In other words, although under the low light amount to medium light amount conditions, the expected value for the detected photon number is dependent on the light amount, it can be said that under the medium light amount to high light amount conditions, the weight of the count value depends on the light amount.

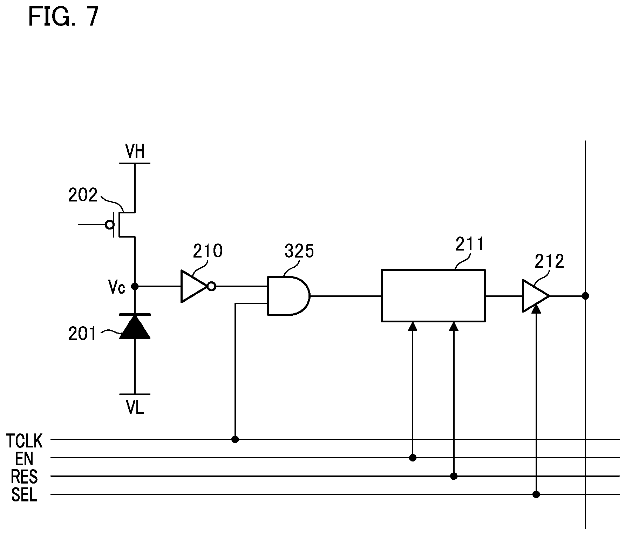

Below, using FIG. 7 to FIG. 10, a method of executing a weighted counting method by changing the weighted counting according to the timing of the photon detection will be explained. In addition, for ease of explanation, the weighed counting method to be described below will be referred to as a "normal weighted counting method".

According to such a configuration, it is possible to execute a weighted counting method while inhibiting an increase in the size of the circuits for the pixel circuits.

In the normal weighted counting method, a plurality of recharge periods (exposure periods corresponding to subframes, also referred to as subframe periods) into which an exposure period corresponding to one frame (also referred to as a one frame period) has been divided into are separated into for example, three varieties, and three varieties of weighted coefficients are also provided.

The present disclosure is not limited thereto, and it is sufficient if the recharge periods are separated into two or more varieties. In this context, a frame is one still image, and for example, a one-minute video image is configured by still images for 30 frames being generated continuously.

It is possible to achieve both an improvement in the Signal Noise Ratio (SNR), and an expansion of the dynamic range by appropriately setting the number into which the frame period is divided, and the weighted coefficients.

FIG. 7 shows a configuration example of a circuit for a photoelectric conversion apparatus according to the normal weighted counting method. There are cases in which explanations will be omitted by attaching the same reference numerals to the configurations that are the same as configurations that were explained in FIG. 4.

The photoelectric conversion apparatus that performs the normal weighted counting method has an AND circuit. The output signal from the waveform shaping unit 210 is input into one terminal of an AND circuit 325, and a clock signal TCLK is input into the other terminal of the AND circuit 325.

The clock signal TCLK, a signal EN, and a reset signal RES are signals that are output from the vertical scanning circuit unit 110 that was shown in FIG. 3. Note that the normal weighted counting method is not limited to this configuration, and may also be a mode in which these signals are output from the control pulse generating unit 115. A selection signal SEL is a signal that is output from the vertical scanning circuit unit 110.

By making the start times and the end times for the exposure periods for all of the valid pixels on which light becomes incident the same times, it is also possible to perform a global shutter operation. In addition, by setting both the start and the end of the exposure periods for the valid pixels onto which light becomes incident so as to be sequential for each pixel, it is also possible to perform a rolling shutter operation.

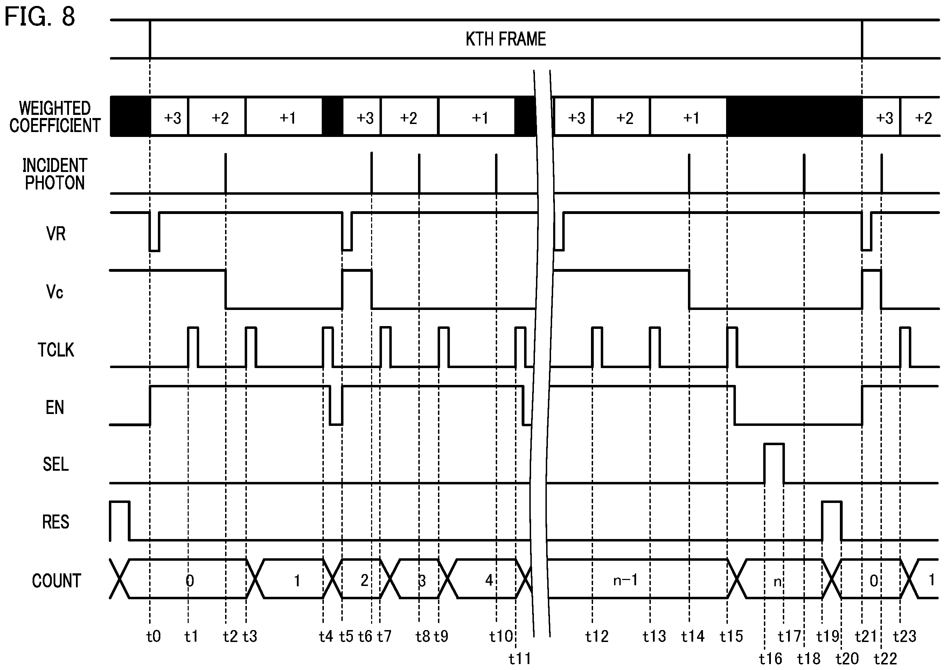

FIG.8 shows a timing chart in the normal weighted counting method.

Note that in the following explanation, cases in which the signal level is relatively low are referred to as low level (written below as L), and cases in which the signal level is relatively high are referred to as a high level (written below as H).

During the time t0, the level for the enable signal EN transitions from L to H. The exposure for a kth frame is thereby begun. The frame period includes a plurality of recharge periods.

In this context, as is shown in FIG. 8, the time from the time t0 to the time t5 is made one recharge cycle. Each recharge period is further divided into four periods, and a weighted coefficient is set for each period. In this context, the weighted coefficients represent "the total count number that has been added to the counter during this recharge cycle as a result of the APD 201 receiving photons during a timing of interest".

At the time t1, the level of clock signal TCLK becomes H. The clock signal TCLK defines the timing at which the weighted coefficients will be switched, and if a photon has already been detected during this recharge cycle and the level for the output signal Vc is L, the amount of 1 LSB is added to the count value for the counter circuit 211. During the time t1, a photon has not yet been detected, and therefore addition to the count value is not performed.

It is assumed that photons become incident on the APD 201 during the time t2. The level for the output signal Vc thereby becomes L.

At the time t3, the level for the clock signal TCLK becomes H, and an amount of 1 LSB is added to the count value for the counter circuit 211.

During the time t4, the level of the clock signal TCLK once again becomes H, and an amount of 1 LSB is added to the count value for the counter circuit 211. That is, from the time t1 until the time t4, at total of an amount of 2 LSB is added to the count value.

From the time t4 until the time t5, the level for the enable signal EN becomes L. The counter circuit 211 is thereby controlled in a disabled state. During this time period, photons that become incident on the APD 201 are not detected.

During the time t5 and later, the operations from the time t0 until the time t5 are repeated.

During the recharge cycle that starts from the time t5, during the time t6, a photon becomes incident on the APD 201. During the time t7, the time t9, and the time t11, the level of the clock signal TCLK becomes H, and an amount of 1 LSB is added to the counter circuit 211 according to each rise of the clock signal TCLK. That is, from the time t5 until the time t11, an amount of 3 LSB is added to the count value.

During the time period from the time t16 until the time t17, the selection signal SEL becomes H. The selection circuit 212 thereby outputs the signal that was held in the counter circuit 211 to the output line.

During the time t18, although photons become incident on the APD 201, the level for the enable signal EN is L, and therefore, signals based on these photons are not counted.

During the time period from the time t19 until the time t20, the level for the rest signal RES becomes H, and the signal that has been held in the counter circuit 211 is reset.

At the time t21, the enable signal EN transitions from L to H, and the exposure for the kth +1 frame begins.

In a case in which the photon detection signal has been output during the first period, a natural number N is added to the counter circuit 211, and in a case in which the photon detection signal has been output during the second period, a natural number M is added to the counter circuit 211.

Furthermore, in a case in which the photon detection signal has been output during the third period, a natural number L is added to the counter circuit. At this time, the natural number N is larger than the natural number M, and the natural number L is smaller than the natural number M. In this context, although a case has been explained in which three varieties of weighted coefficients have been set, the number of weighted coefficients that are set is not limited to three, and it is sufficient if two or more weighted coefficients are set.

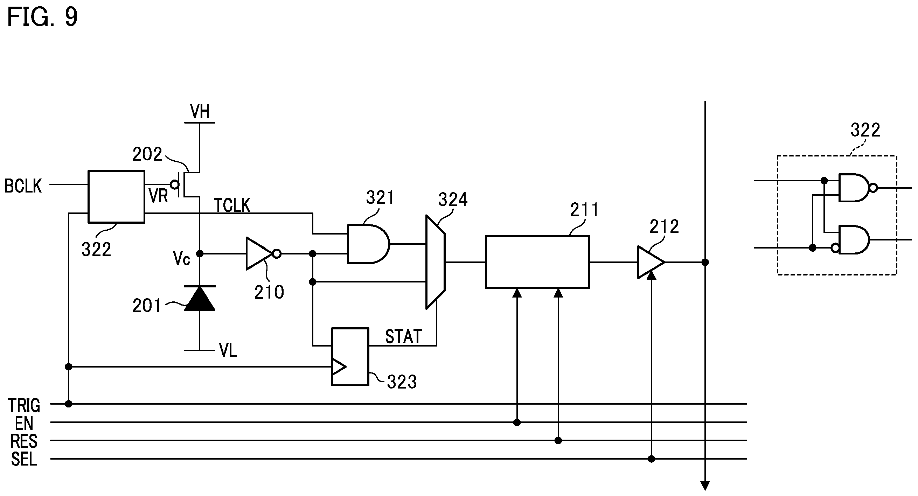

FIG. 9 shows a modification example of a configuration of a photoelectric conversion apparatus according to the normal weighted count method (referred to below as the present configurational example).

With respect to the circuits of the present configurational example, in addition to the circuits that are shown in FIG. 7, the present configurational example further has a control circuit 322, a D flip flop circuit 323, and a multiplexer 324. The D flip flop circuit 323 holds a history of the presence or absence of photon detection during the immediately previous recharge period.

In a case in which the photon detection results during the immediately previous recharge period indicate that no photon was detected, weighting is not performed for the count value for the current recharge period, and an amount of 1LSB is added to the count value. According to such a configuration, the possibility of counting noise as the photon detection results decreases.

Thus, statistical dispersion of the count value is inhibited, and in particular, it is possible to increase the SNR in low light amount environments.

In this context, a clock signal BCLK is a clock signal for generating a pulse for a clock signal VR and the clock signal TCLK. In addition, a trigger signal TRIG is a pulse signal that selectively generates the clock signal VR and the clock signal TCLK from the clock signal BCLK.

If a pulse for the clock signal BCLK is input when the level of the trigger signal is H, the clock signal VR is generated as an inverted logic pulse. In addition, if the pulse for the clock signal BCLK is input when the level for the trigger signal TRIG is L, the clock signal TCLK is generated as a positive logic pulse.

In this format, the clock signal VR and the clock signal TCLK are both generated by using the same clock signal BCLK. In the case of such a format, there is an effect of being able to make it more difficult to be affected by Skew, and the like in comparison to a case in which the clock signal VR and the clock signal TCLK are transmitted using different signal lines. In particular, there is the effect that in a case in which there is a large amount of pixels (for example, one million pixels or greater) as well it is difficult for image quality distortion to occur.

The control circuit 322 is configured by, for example, combining a NAND circuit and an AND circuit. The clock signal BCLK and the trigger signal TRIG are input into an input terminal of the NAND circuit. In addition, inverted signals of the clock signal BLCK and the trigger signal TRIG are input into an input terminal of the AND circuit.

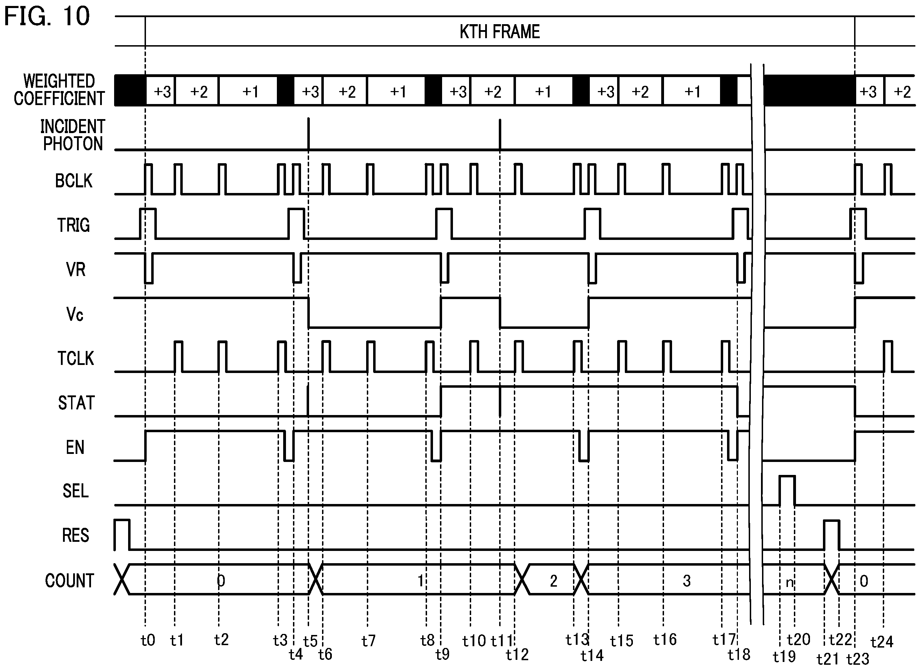

FIG. 10 is a timing chart for the configurational example that was shown in FIG. 9.

In the D flip flop circuit 323, a signal STAT becomes H in a case in which photon detection occurred during the immediately previous recharge cycle, and the signal STAT becomes L in a case in which a photon has been detected in the immediately previous recharge cycle. In a case in which the signal STAT is L, if a pixel has been detected during the cycle of interest, 1 is added to the count value regardless of the timing thereof.

In a case in which the signal STAT is H, one of 3, 2, and 1 is added to the counter according to the timing at which the photon was detected within the cycle of interest.

At the time t0, the enable signal EN transitions from L to H. The exposure for the kth frame is thereby begun.

A photon is not detected during the period from the time t0 until the time t4. The signal STAT becomes L during the recharge period from the time t4.

It is assumed that a photon becomes incident on the APD 201 at the time t5. The level of the signal STAT is high, and therefore, at the same time as the generation of the photon detection event, an amount of 1 LSB is added to the count value.

During the period from the time t9 to the time t14, a photon was detected during the immediately previous recharge period (the period from the time t4 until the time t9), and therefore, the signal STAT becomes H.

It is assumed that a photon becomes incident on the APD 201 at the time t11. The level of the signal STAT is H, and therefore, an amount of 1 LSB is added to the count value for each time from the time t12 until the time t13, during which the clock signal TCLK rises. In total, an amount of 2 LSB is added to the count value.

During the period from the time t14 until the time t18, a photon has been detected during the immediately previous recharge period (the period from the time t9 until the time t14), and therefore, the level of the signal STAT remains H. If after this as well, a photon is detected during the immediately previous period for each recharge period, the level of the signal STAT will be H, and if a photon is not detected, the level of the signal STAT will become L.

At the time t15, the enable signal EN transitions from H to L. Thus, the subsequent incident light is not counted.

At the time t23, the enable signal EN transitions from L to H. The exposure of the kth +1 frame is thereby begun. The level of the signal STAT may also forcefully be made L according to a switch in frames, and the level of the signal STAT during the initial recharge period for the kth+1 frame may also be determined by receiving the photon detection results for the final recharge period of the kth frame.

Note that although in the present embodiment, the weighting method for the count was changed based on results showing the presence or absence of photon detection during the immediately previous recharge period, the present disclosure is not limited thereto. For example, the weighting method may also be changed based on results showing the presence or absence of photon detection during a recharge cycle that was two or more recharge cycles previous, and the method may also be changed based on a plurality of results indicating the presence or absence of photon detection during a plurality of past recharge cycles.

Note that the control circuit 322 may also be provided for each pixel. In addition, this may also be a configuration in which a shared signal is output from one control circuit 322 for a plurality of pixels.

Below, photoelectric conversion apparatuses according to each embodiment of the present disclosure will be explained.

### (First Embodiment)

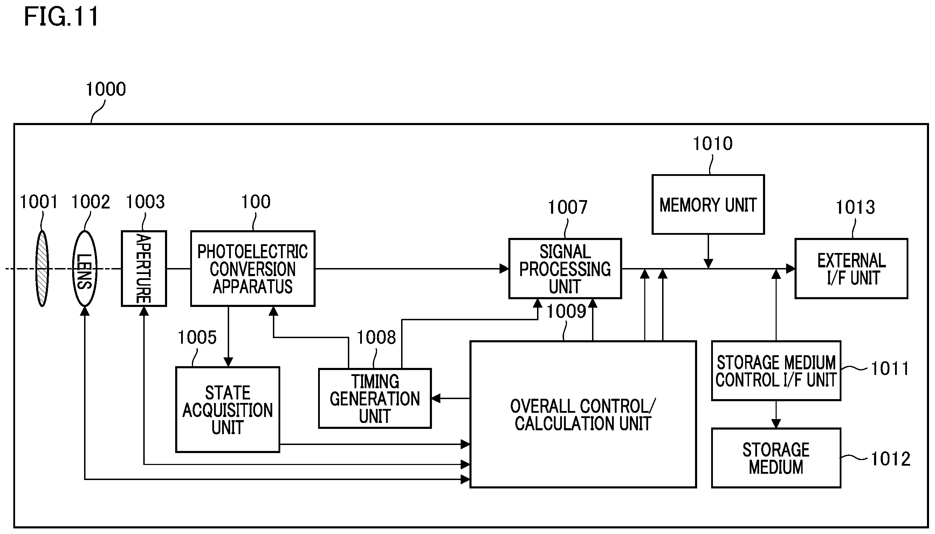

The photoelectric conversion system according to the present embodiment will be explained using FIG. 11. FIG. 11 is a functional block diagram showing a general configuration of a photoelectric conversion system 1000 according to the present embodiment.

Note that a portion of the functional blocks that are shown in FIG. 11 are realized by a CPU and the like that serves as a computer, which is not shown, and is included in the photoelectric conversion system 1000, executing a computer program that has been stored on a memory that serves as a storage medium.

However, a portion or the entirety thereof may also be made so as to be realized by hardware. An application specific integrated circuit (ASIC), a processor (a reconfigurable processor, a DSP), and the like can be used as this hardware.

In addition, each functional block that is shown in FIG. 11 does not need to be housed in the same body, and may also be configured by separate apparatuses that have been connected to each other via signal path.

Note that the photoelectric conversion system of the present embodiment can be applied to, for example, a digital still camera, a digital camcorder, a surveillance camera, a copy machine, a fax machine, a portable phone, an onboard camera, an observation satellite, and the like.

Note that in the present embodiment, by setting a counting method according to a state of the photoelectric conversion system in a photoelectric conversion system that uses a photoelectric conversion element using avalanche multiplication, the power consumption is decreased while maintaining the dynamic range according to the weighted counting method.

In addition, a camera module that is provided with an optical system such as a lens and the like, and a photoelectric conversion element is also included in the photoelectric conversion system. FIG. 11 shows an example in which the photoelectric conversion system has been applied to a digital still camera as one example.

The photoelectric conversion system 1000 that is shown in FIG. 11 has the photoelectric conversion apparatus 100, and a lens 1002 that forms optical images of subjects in the photoelectric conversion apparatus 100. The photoelectric conversion system further has an aperture 1003 for making it possible to change the amount of light that passes through the lens 1002, and a barrier 1001 for protecting the lens 1002.

Note that the photoelectric conversion apparatus 100 has the configuration that was explained in FIG. 1 through FIG. 10. That is, the photoelectric conversion apparatus 100 has the APD 201 that serves as the photoelectric conversion element for generating a photon detection signal using avalanche multiplication, and the counter circuit 211 for counting the photon detection signals that are output from the APD 201 that serves as the photoelectric conversion element.

The lens 1002 and the aperture 1003 are an optical system that condenses light in the photoelectric conversion apparatus 100. The photoelectric conversion apparatus 100 converts the optical images that have been formed by the lens 1002 into electric signals.

The photoelectric conversion system has a signal processing unit 1007, which is an image generating unit that generates images by performing processing on the output signal that is output from the photoelectric conversion apparatus 100. The signal processing unit 1007 performs operations that output image data by performing each type of correction, and compression according to necessity.

Note that the signal processing unit 1007, and the like may also be formed by a semiconductor layer that has been provided in the photoelectric conversion apparatus 100, and these may also be formed by a semiconductor layer that is separate from the photoelectric conversion apparatus 100.

The photoelectric conversion system further has a memory unit 1010 that temporarily stores image data, and an external I/F unit (external interface unit) 1013 for communication with external computers, and the like.

The photoelectric conversion system further has a storage medium 1012 such as a semiconductor memory, and the like, for performing recording and readout of image data, and a storage medium control I/F unit (storage medium control interface unit) 1011 for performing recording and readout to/from the storage medium 1012. Note that the storage medium 1012 may be built into the photoelectric conversion system, and may also be detachable from the photoelectric conversion system.

Furthermore, the photoelectric conversion system 1000 has an overall control/calculation unit 1009 that performs each type of calculation and controls the entirety of the digital still camera. Note that a CPU and the like that serves as a computer is built into the overall control/calculation unit 1009, and functions as a control unit that controls the operations of each unit of the entire apparatus based on a computer program that has been stored on the memory unit 1010 that serves as a storage medium.

In addition, the photoelectric conversion system 1000 has a timing generating unit 1008 that outputs each type of timing signal to the photoelectric conversion apparatus 100 and the signal processing unit 1007, and a state acquisition unit 1005 that acquires state information for the photoelectric conversion system and the like. Note that the state acquisition unit 1005 acquires state information relating to a state of at least a portion of the photoelectric conversion system, and surroundings of the photoelectric conversion system.

Note that as is shown in FIG. 8, and FIG. 10, the timing generating unit 1008 generates a pulse signal for increasing the count value for the counter circuit 211 along with the passage of time during a plurality of second exposure periods that are shorter than the first exposure period that corresponds to one frame. Note that the pulse signal corresponds to the clock signal TCLK. In addition, the second exposure period is the recharge period for recharging the photoelectric conversion element.

Note that the above described timing signal and the like may also be input externally. In addition, it is sufficient if the photoelectric conversion system has at least the photoelectric conversion apparatus 100, the signal processing unit 1007 that processes the output signals that have been output from the photoelectric conversion apparatus 100, and the state acquisition unit 1005.

The state acquisition unit 1005 includes a temperature acquisition unit that acquires a temperature of the photoelectric conversion apparatus 100, a temperature of the photoelectric conversion system 1000, and a surrounding temperature for the photelectric conversion system 1000.

For example, the temperature acquisition unit is able to acquire a temperature of a thermistor that has been built into the photoelectric conversion apparatus 100, the temperature of the photoelectric conversion system 1000 that has been heated by heat from the circuit elements such as the photelectric conversion apparatus 100, and the like, and the surrounding temperature of the photoelectric conversion system 1000. That is, the state acquisition unit 1005 acquires temperature information for at least a portion of the photoelectric conversion system, and the surroundings the photoelectric conversion apparatus to serve as the state information.

The temperature of the thermistor that has been built into the photoelectric conversion apparatus 100 changes by, for example, the overall control/calculation unit 1009 changing the resolution and framerate of the images that are output from the photoelectric conversion apparatus 100.

Note that for example, the temperature of the photoelectric conversion system 1000 changes due to the drive of the photoelectric conversion apparatus 100 that was described above, as well as the overall control/calculation unit 1009 executing image recognition and the like using images that have been output from the photoelectric conversion system 1000.

In addition, the state acquisition unit 1005 may also be a power consumption acquisition unit that acquires the power consumption for at least one circuit element that is included in the photoelectric conversion system 1000. That is, the state acquisition unit 1005 may also be a unit that acquires the power consumption for at least a portion of the photoelectric conversion system as the state information.

The power consumption changes, for example, due to the overall control/calculation apparatus 1009 changing the resolution and frame rate of the images that are output from the photoelectric conversion apparatus 100, and executing image recognition and the like using images that have been output from the photoelectric conversion system 1000.

Furthermore, the state acquisition unit 1005 may also be a count value acquisition unit that acquires the clock signal TCLK information that has been output from the photoelectric conversion apparatus 100. That is, the state acquisition unit 1005 may also acquire the power consumption information for at least a portion of the photoelectric conversion system to serve as the state information.

Note that the count value changes, for example due to high intensity light such as light from the sun and the like becoming incident on the photoelectric conversion apparatus 100, and avalanche multiplication occurring.

The photoelectric conversion apparatus 100 outputs the image capturing signal to the signal processing unit 1007. The signal processing unit 1007 executes specific signal processing on the image capturing signal that has been output from the photoelectric conversion apparatus 100, and outputs image data. The signal processing unit 1007 uses the image capturing signal that is output from the photoelectric conversion apparatus 100 and generates images.

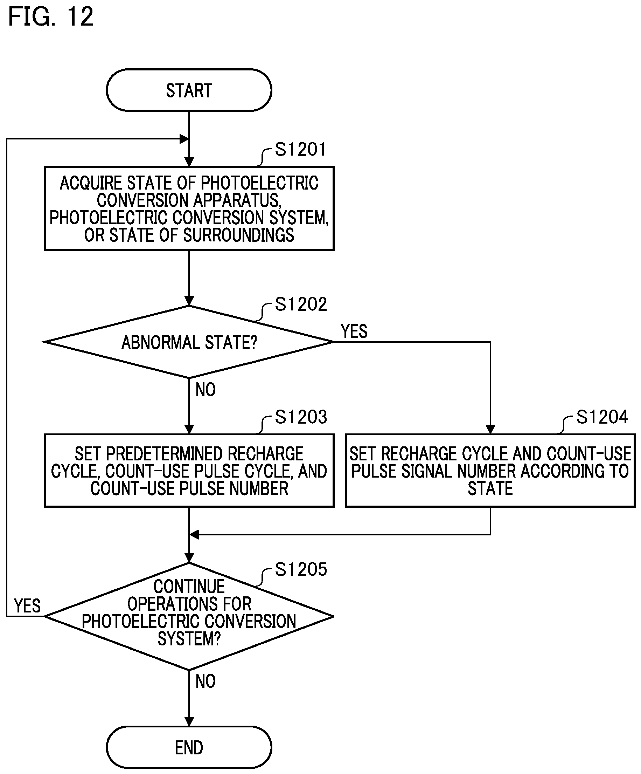

FIG. 12 is a flowchart showing one example of an operational flow for the control method of the photoelectric conversion system 1000 according to the First Embodiment. Note that the operations for each step of the flowchart of FIG. 12 are performed in order by a CPU and the like that serves as a computer inside of the overall control/calculation unit 1009 executing a computer program that has been stored on a memory.

During step S1201, the state acquisition unit 1005 acquires the state of the photoelectric conversion apparatus 100 or the state of the photoelectric conversion system 1000, or the state of the surroundings, and outputs the state to the overall control/calculation apparatus 1009. As has been explained above, the state acquisition unit 1005 may also be a temperature acquisition unit, a power consumption acquisition unit, and a count acquisition unit.

In addition, the temperature and the power consumption can be acquired in real time, and therefore, for example, the temperature acquisition unit and the power consumption unit may also acquire the state information such as the temperature, the power consumption, and the like at an arbitrary timing, and they may also acquire this information cyclically in synchronization with the recharge cycles, and the like.

In contrast, the count value acquisition unit cannot read out the count value until it has been added to by a certain extent. Therefore, for example, if it assumed that the present processing flow is the processing flow for the kth frame, the state acquisition unit 1005 may also acquire the count value for the time of the completion of the frame for the kth-1 frame. However, the present disclosure is not limited thereto.

During step S1202, the overall control/calculation unit 1009 determines whether or not the state of the photoelectric conversion apparatus 100 and the photoelectric conversion system 1000, and the state of the surroundings are abnormal based on the state information that has been acquired by the state acquisition unit 1005.

For example, in a case in which the state acquisition unit 1005 is a temperature acquisition unit, if the temperatures of the photoelectric conversion apparatus 100, and the photoelectric conversion system 1000, and the surroundings thereof have exceeded an upper limit temperature that has been set in advance, the state acquisition unit 1005 determines that the state is abnormal. In a case in which it has been determined that the state is not abnormal, the processing transitions to step S1203, and in a case in which it has been determined that the state is abnormal, the processing transitions to step S1204.

During step S1203, a predetermined recharge cycle, a predetermined count-use pulse cycle, and a predetermined number of count-use pulses are set. That is, photon counting is performed using the above-described "normal weighted counting method" in a state in which each of the recharge cycle, the pulse cycle, and number of pulses at which the clock signal TCLK becomes H during each recharge period are each set at predetermined values.

As is shown in FIG. 8, the timing chart in the settings in step S1203 further divides each recharge period into four periods, and sets a weighted coefficient for each time period. Therefore, settings are made such that the clock signal TCLK becomes H three times per one recharge cycle, and a maximum of an amount of 3 SLB is added to the count value during one recharge cycle according to the incidence timing of photons.

In this manner, it is possible to acquire images in which an increase in the SNR and an expansion of the dynamic range have been realized by appropriately setting the number into which the frame period is divided and the weighted coefficients. After this, the processing transitions to step S1205.

In contrast, during step S1204, the recharge cycle and the number of count-use pulse signals are set according to the state. That is, at least one recharge cycle is extended, and the number of pulses at which the clock signal TCLK becomes H during the recharge cycle that has been extended is increased.

That is, during step S1204, the control unit changes the cycle for at least one of the second exposure periods and also changes the number of pulse signals that are included in this second exposure period according to the state information that has been acquired by the state acquisition unit.

Specifically, the at least one second exposure period is extended and the number of pulse signals for the second exposure period for which the cycle has been extended are increased according to the state information.

For example, the at least one recharge cycle is extended so as to be double the length of the recharge cycle in step S 1203. In addition, the number of pulses at which the clock signal TCLK becomes H during the extended recharge cycle are increased so as to be twice the number of the number of pulses at which the TCLK becomes H during step S1203.

However, the scaling factor for the increase in the recharge cycle and the scaling factor for the increase to the number of pulses at which the clock signal TCLK becomes H during the changed recharge cycle are not limited thereto. In addition, for ease of explanation, the weighted counting method for step S 1204 is referred to as the "weighted counting method for the time of an abnormal state".

After this the processing transitions to step S1205. The timing chart for the settings during step S1204 will be explained below.

During step S1205, it is determined whether or not the operations of the photoelectric conversion system 1000 will be continued. In a case in which the operations will continue, the processing returns to step S1201, and in a case in which the operations will not be continued, the processing flow for FIG. 12 is ended.

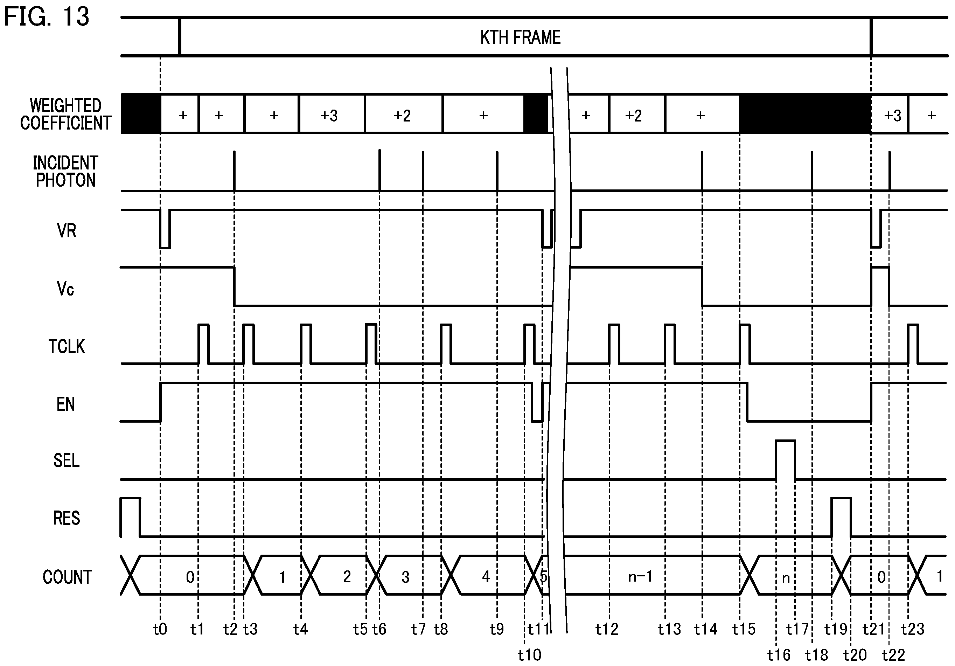

FIG. 13 is a timing chart showing an example of operation timings during step S1204. FIG. 13 shows a timing chart for a case in which a portion of the recharge cycle during one frame is extended so as to double in length, and the number of pulses at which the clock signal TCLK during the extended recharge cycle becomes H are increased so as to double.

However, as has been explained above, neither the scaling factor for extending the recharge cycle, nor the scaling factor for increasing the number of pulses at which the flock signal TCLK becomes H during the changed recharge period are limited to being doubled.

In FIG. 13, at the time t0, the level of the enable signal EN transitions from L to H. The exposure of the kth frame is thereby begun. The frame period includes a plurality of recharge periods.

In the present embodiment, the time from the time t0 until the time t11 in FIG. 13 is one recharge cycle, and the recharge cycle from the time t0 to until the time t5 during the "normal weighted counting method" that is shown in FIG. 8 is doubled.

In addition, each recharge period is further divided into seven periods, and weighted coefficients are set for each period. In this context, the weighted coefficients represent "the total count number that is added to the counter within this recharge cycle as a result of photons having been received by the APD 201 at a timing of interest".

The level for the clock signal TCLK at the time t1 becomes H. The clock signal TCLK defines the timing at which the weighted coefficients switch, and if a photon has already been detected within this recharge cycle and the level of output signal Vc is L, an amount of 1 LSB is added to the count value for the counter circuit 211. A photon has not yet been detected at the time t1, and therefore, addition to the count value is not performed.

At the time t2, a photon becomes incident on the APD 201. The level of the output signal Vc thereby becomes L.

At the time t3, the level for the clock signal TCLK becomes H, and an amount of 1 LSB is added to the count value for the counter circuit 211.

At the time t4, the level of the clock signal TCLK becomes H again, and an amount of 1 LSB is added to the count value for the counter circuit 211. That is, a total amount of 2 LSB is added to the count value from the time t1 until the time t4.

At the time t5, the level of the clock signal TCLK becomes H again, and an amount of 1 LSB is added to the count value for the counter circuit 211. That is, a total amount of 3 LSB is added to the count value from the time t1 until the time t5.

At the time t6, a photon becomes incident on the APD 201. However, the level of the output signal Vc is already L, and therefore, nothing is added to the count value for the counter circuit 211. In the same manner, even though photons become incident on the APD 201 at the time t7, and the time t9 as well, the level for the output signal Vc is already L, and therefore, nothing is added to the count value of the counter circuit 211.

At the time t8, the level for the clock signal TCLK becomes H again, and an amount of 1 LSB is added to the count value for the counter circuit 211. That is, from the time t1 until the time t8, a total amount of 4 LSB is added to the count value.

At the time t10, the level of the clock signal TCLK becomes H again, and an amount of 1 LSB is added to the count value for the counter circuit 211. That is, from the time t1 until the time t10, a total amount of 5 LSB is added to the count value.

In this manner, it becomes possible to decrease the avalanche multiplication number, and to reduce the power consumption of the photoelectric conversion apparatus 100 by extending at least a portion of the recharge cycle during one frame.

In addition, it is possible to hold the count value during one frame and to maintain the dynamic range of the "normal weighted counting method" by increasing the number of pulses at which the clock signal TCLK becomes H during the extended recharge cycle.

That is, in the present embodiment, the recharge cycle is extended and the number of pulses at which the clock signal TCLK becomes H during this extended recharge period is increased according to the state that has been acquired by the state acquisition unit 1005. Therefore, it is possible to decrease the power consumption of the photoelectric conversion apparatus 100 while maintaining the dynamic range of the "normal weighted counting method".

In addition, when doing so, the recharge cycle in the "normal weighted counting method" is extended by the natural number N amount of times (N>=2), and the number of pulses at which the clock signal TCLK becomes H during the extended recharge cycle is also increased by the natural number N amount of times.

That is, the control unit extends the cycle of the at least one second exposure period by the natural number N amount of times according to the state information, and the number of pulse signals for the second exposure period for which the cycle has been extended by the natural number N amount of times is also increased by the natural number N amount of times.

According to this, in comparison with the "normal weighted counting method", the value of one count in the "weighted counted method at the time of an abnormal state" does not change, and therefore, even if the photoelectric conversion system 1000 automatically switches between both of these counting methods, the output expected value for the photoelectric conversion system 1000 will not change.

That is, it becomes possible to reduce the power consumption of the photoelectric conversion apparatus 100 while maintaining the dynamic range caused by the "normal weighted counting method", and furthermore, there is no need to correct the count values for each pixel region even if the photoelectric conversion system 100 automatically switches between both of these counting methods.

However, the recharge cycle in the "weighted counting method for the time of an abnormal state" is extended, and therefore, there is a possibility that the SNR of the image signal that is output from the photoelectric conversion apparatus 100 will be lowered in comparison to the "normal weighted counting method".

In addition, although in the present embodiment, an explanation has been given using the example of a digital still camera, as has been explained above, in a case in which the photoelectric conversion system of the present embodiment is applied to an onboard camera, in order to maintain the safety of the passengers, generally, a high degree of functional safety is required.

In addition, in onboard cameras, it is easy for the photoelectric conversion apparatus 100 to reach a high temperature due to exposure to direct sunlight and the like, and therefore, it is also easy for performance degradation to occur in the photoelectric conversion apparatus 100. Therefore, in an onboard camera, it is necessary to realize a photoelectric conversion system that prevents performance degradation caused by high temperatures of the photoelectric conversion apparatus 100 before this occurs, and in which a constantly high functional safety has been secured.

As a means for securing a high functional safety, for example, it is preferable if an upper temperature limit that the overall control/calculation unit 1009 uses for determining whether or not the photoelectric conversion system 1000 and the photoelectric conversion apparatus 100 are in an abnormal state is set in advance as low in comparison to a different application example.

### (Second Embodiment)

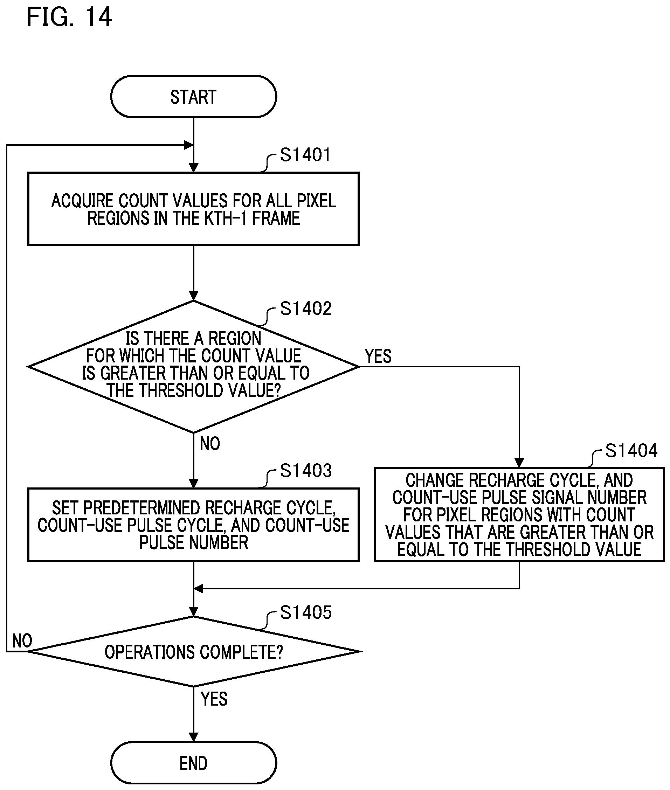

FIG. 14 is a flowchart showing an example of a processing flow for the photoelectric system according to the Second Embodiment. In this context, for example, although FIG. 14 is the processing flow for the kth frame (k>=2), the present disclosure is not limited thereto.

In addition, in the present embodiment, an example will be explained in which the state acquisition unit 1005 acquires the state via a count value acquisition unit. Note that a functional block diagram that represents an overview of the configuration of the photoelectric conversion system according to the present embodiment is the same as the functional block diagram in FIG. 11.

During step S1401, the count value acquisition unit acquires count value information for all of the pixel regions that has been output from the photoelectric conversion apparatus 100 at the time of the completion of the kth -1 frame (k>=2), and outputs this to the overall control/calculation unit 1009.

As has been explained above, unless the count value has been added to by a certain extent, the count value cannot be readout. Therefore, in this context, in the processing flow for the kth frame, the count value for the completion time of the kth-1 frame is acquired. However, the acquisition timing of the count value is not limited thereto.

During step S1402, the overall control/calculation unit 1009 determines whether or not a pixel region exists for which the count value thereof is equal to or greater than a threshold value that has been set in advance based on the count value information for all of the pixel regions that has been acquired by the count value acquisition unit.

In a case in which it has been determined that a pixel region does not exist for which the count value is greater than or equal to the threshold value that has been set in advance, the processing proceeds to step S1403, and in a case in which it has been determined that a pixel region does exist for which the count value is greater than or equal to the threshold value that has been set in advance, the processing proceeds to step S1404.

During step S1403, a predetermined recharge cycle, count-use pulse cycle, and number of count-use pulses are set. That is, photon counting is performed according to the "normal weighted counting method" that has been explained above in a state in which all of the recharge cycle, and the cycle and number of pulses at which the clock signal TCLK becomes H during one recharge cycle have been set at predetermined values.

At this time, the timing chart is the same as the timing chart in FIG. 8, and each recharge period is further divided into four periods, and weighted coefficients are set for each period. Therefore, settings are performed such that the level of the clock signal TCLK becomes H three times per one recharge cycle, and a maximum of an amount of 3 LSB is added to the count value during one recharge cycle according to the incidence timing of the photons.

In this manner, it is possible to acquire an image in which an improvement in the SNR and an expansion of the dynamic range have been achieved by appropriately setting the weighted coefficients and the number into which the frame periods are divided. After this, the processing proceeds to step S1405.

In contrast, during step S1404, the recharge cycle and the number of count-use pulse signals are changed in pixel regions for which the count value is greater than or equal to the threshold value. That is, the timing generating unit 1008 performs settings such that for subsequent recharge cycles, in the at least one pixel region for which the count value is greater than or equal to the threshold value that has been set in advance, the recharge cycle is extended. In addition, the number of times that the level for the clock signal TCLK becomes H during the recharge cycle for which the cycle has been set so as to be extended is increased.

For example, in a pixel region for which the count value is greater than or equal to the threshold value, at least one recharge cycle during the subsequent recharge cycles is extended so as to be two times the recharge cycle for step S1403. In addition, the number of times that the clock signal TCLK becomes H during the recharge cycle for which the cycle has been extended is increased by two times the number of times for step S1403.

In this manner, in the present embodiment, in a case in which the number of pulse signals for each pixel region in the photoelectric conversion element is equal to or greater than a predetermined value, the cycle for the second exposure period in at least one pixel region is extended, and the number of pulse signals for the second exposure period for which the cycle has been extended is increased.

However, the scaling factor for increasing the recharge cycle and the scaling factor for increasing the number of times that the clock signal becomes H during the recharge cycle for which the cycle has been extended are not limited thereto. In addition, the timing chart for this time is the same as the timing chart in FIG. 13. After this, the processing proceeds to step S1405.

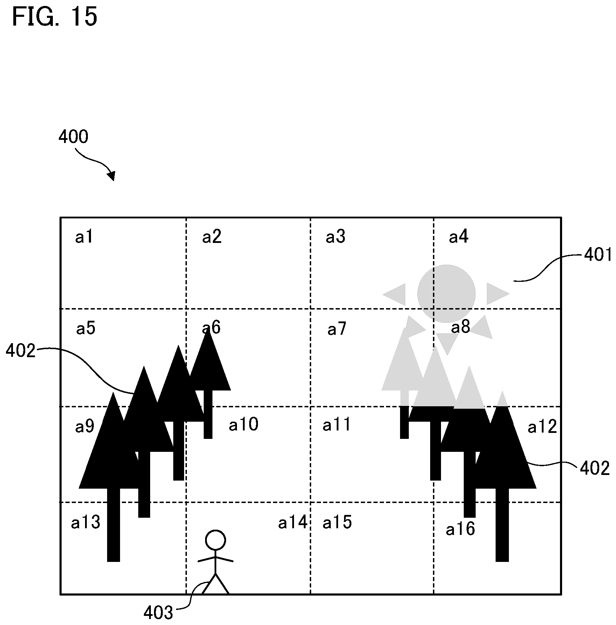

FIG. 15 shows one example of an image in which a pixel region exists for which the count value is greater than or equal to the threshold value that has been set in advance. In FIG. 15, a sun 401, a roadside tree 402, and a person 403 are shown in an image 400. In addition, the image 400 is configured by image regions a1 to a16 that have been divided into sixteen portions.

However, the number of regions into which the image is divided is not limited thereto, and for example, the image may also be divided into a portion for each pixel. From among these image regions, the image region a3, the image region a4, the image region a7, and the image region a8 are high luminance pixel regions in which the light from the sun 401 becomes directly incident on the photoelectric conversion apparatus 100.

That is, avalanche multiplication frequently occurs in these high luminance image regions, and this can become a cause for an increase in the energy consumption of the photoelectric conversion apparatus 100. In this context, in a case in which the count value is greater than or equal to a predetermined threshold value during step S1402, the recharge cycle in the high luminance pixel regions is extended during step S1404.

Therefore, it is possible to decrease the number of times that avalanche multiplication occurs, and to decrease the power consumption for the photoelectric conversion apparatus 100. In addition, by increasing the number of pulses at which the clock signal TCLK becomes H during the recharge cycle for which the cycle has been extended, it is possible to hold the count value during one frame, and to maintain the dynamic range of the "normal weighted counting method".

Note that, for ease of explanation, below, the weighted counting method during step S1404 will be referred to as the "weighted counting method for the time of a high count value".

During step S1405, it is determined whether or not to complete the operations of the photoelectric conversion system 1000. In a case in which the operations will be continued, the processing returns to step S1401, and in a case in which they will be completed, the processing flow for FIG. 14 is ended.

In this manner, in the present embodiment, by extending the recharge cycle for pixel regions in which avalanche multiplication frequently occurs for which the count value is greater than or equal to the threshold value, it becomes possible to reduce the power consumption for the photoelectric conversion apparatus 100 while maintaining the SNR for the pixel regions for which the count value is lower than the threshold value.

In addition, by increasing the number of pulses at which the clock signal TCLK becomes H during the recharge cycle for which the cycle has been extended, the count value for during one frame is held. Therefore, it is possible to maintain the dynamic range of the "normal weighted counting method" in pixel regions for which the recharge cycle has been extended.

Furthermore, in pixel regions for which the count value is equal to or greater than the threshold value, the recharge cycle is extended by a natural number N amount of times (N >= 2) for the "normal weighted counting method". In addition, the number of pulses at which the clock signal TCLK becomes H during the recharge cycle for which the cycle has been extended is increased by the natural number N amount of times for the "normal weighted counting method".

The value for one count thereby does not change for the "normal weighted counting method" and the "weighted counting method for the time of a high count value", and therefore, the output expected value for the photoelectric conversion system 1000 does not change even if the photoelectric conversion system 1000 automatically switches between both of these counting methods.

That is, it becomes possible to decrease the power consumption for the photoelectric conversion apparatus 100 while maintaining the dynamic range of the "normal weighted counting method", and it is not necessary to correct the count values per pixel region even if the photoelectric conversion system 1000 automatically switches between both of these counting methods.

### (Third Embodiment)

As has been explained above, in the "weighted counting method for the time of an abnormal state", the recharge period for the "normal weighted counting method" is extended, and therefore, there is a possibility that the SNR for the image signal that is output from the photoelectric conversion apparatus 100 will decrease in comparison to the SNR for the "normal weighted counting method".

Therefore, in the Third Embodiment, the specifications are changed for the time of image processing of the image signal that has been output from the photoelectric conversion apparatus 100 in the pixel regions for which the recharge cycle has been extended. Note that for example, the specifications for the image processing are the characteristics of a noise eliminating filter that is used in noise reduction processing for the image signal that has been output from the photoelectric conversion apparatus 100, and the like.

That is, in the "weighted counting method for the time of an abnormal state", a filter having higher noise eliminating effects may be used in comparison to the filter for the "normal weighted counting method". However, the specifications that are changed at the time of the image processing are not limited thereto.

In this manner, in the present embodiment, in at least one pixel region, the control unit extends the cycle of the second exposure period, and increases the number of the pulse signals for the second exposure period for which the cycle has been set according to the state information that has been acquired by the state information acquisition unit.

In addition, it is also made such that together with this, the noise reduction processing for the image signal that has been output from the pixel region is strengthened. Therefore, it is possible to inhibit decreases in the SNR of the image signal that output from the photelectric conversion apparatus 100.

As has been explained above, in the embodiments of the present disclosure, in a case in which the state information that has been acquired by the state acquisition unit is a predetermined state, the control unit extends the cycle for the second exposure period and also increases the number of pulse signals that are included in the second exposure period.

Note that the above described case of a predetermined state includes at least one of a case in which a temperature of at least a part or surroundings of the photoelectric conversion system is greater than or equal to a predetermined temperature, a case in which at least a part of the power consumption of the photoelectric conversion system is greater than or equal to a predetermined power consumption value, and a case in which the count value is greater than or equal to a predetermined count threshold value.

Therefore, according to the embodiments of the present disclosure, it is possible to change the photon counting method according to the state in a photoelectric conversion system that uses avalanche multiplication and is able to detect incredibly weak light at the level of a single photon. Therefore, it is possible to reduce the power consumption while maintaining the dynamic range according to the weighted counting method.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion system, and the like through a network or various storage media. Then, a computer (or a CPU, an MPU, or the like) of the photoelectric conversion system, and the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2025-090624, filed on May 30, 2025, which is hereby incorporated by reference herein in its entirety.

## Claims

1. A photoelectric conversion system comprising:
a photoelectric conversion element configured to generate photon detection signals by avalanche multiplication;
a counter circuit configured to count the photon detection signals that are output from the photoelectric conversion element;
a timing generation unit configured to generate a pulse signal for increasing a count value for the counter circuit along with the progression of time in a plurality of second exposure periods that are shorter than a first exposure period that corresponds to one frame; and
state acquisition unit for acquiring state information relating to a state of at least a part or surroundings of the photoelectric conversion system; and
control unit for changing, according to the state information that has been acquired by the state acquisition unit, a cycle of at least one of the second exposure periods, and a number of the pulse signals that are included in the second exposure periods.

2. The photoelectric conversion system according to claim 1, wherein the state acquisition unit acquires temperature information of at least a part or surroundings of the photoelectric conversion system as the state information.

3. The photoelectric conversion system according to claim 1 or 2, wherein the state acquisition unit acquires power consumption information of at least a part of the photoelectric conversion system as the state information.

4. The photoelectric conversion system according to any one of claims 1 to 3, wherein the state acquisition unit acquires a number of pulse signals that have been output from the photelectric conversion element as the state information.

5. The photelectric conversion system according to any one of claims 1 to 4, wherein according to the state information, the control processing unit extends a cycle of at least one of the second exposure periods, and increases the number of the pulse signals for the second exposure periods for which the cycle has been extended.

6. The photoelectric conversion system according to claim 5, wherein according to the state information, the control unit extends a cycle of at least one of the second exposure periods by a natural number N times, and increases the number of the pulse signals for the second exposure periods for which the cycle has been extended by the natural number N times.

7. The photoelectric conversion system according to any one of claims 1 to 6, wherein, in a case in which the number of the pulse signals for each pixel region in the photoelectric conversion element is at or above a predetermined value, the cycle of the second exposure period in at least one pixel region is extended, and the number of the pulse signals for the second exposure period for which the cycle has been extended is also increased.

8. The photoelectric conversion system according to claim 7, wherein according to the state information, in at least one pixel region, the control unit extends the cycle of the second exposure periods, increases the number of the pulse signals for the second exposure periods for which the cycle has been set, and strengthens noise reduction processing for image signals that have been output from the pixel regions.

9. The photoelectric conversion system according to any one of claims 1 to 8, wherein the second exposure period corresponds to a recharge period for recharging the photelectric conversion element.

10. The photoelectric conversion system according to any one of claims 1 to 9, wherein according to the state information, in a case of at least one of a case in which a temperature of at least a part or surroundings of the photoelectric conversion system is greater than or equal to a predetermined temperature, in a case in which power consumption of at least a part of the photelectric conversion system is greater than or equal to a predetermined power consumption, and in a case in which the count value is greater than or equal to a predetermined count value, the control unit extends a cycle of the second exposure periods, and increases a number of the pulse signals that are included in the second exposure periods.

11. A control method for controlling a photoelectric conversion system comprising a photoelectric conversion element configured to generate photon detection signals by avalanche multiplication; a counter circuit configured to count photon detection signals that are output from the photoelectric conversion element; and a timing generation unit configured to generate a pulse signal for increasing a count value for the counter circuit along with the progression of time in a plurality of second exposure periods that are shorter than a first exposure period that corresponds to one frame, the method comprising:
acquiring state information relating to a state of at least a part or surroundings of the photoelectric conversion system; and
changing, according to the state information that has been acquired by the state acquisition processing, a cycle of at least one of the second exposure periods, and a number of the pulse signals that are included in the second exposure periods.

12. A computer readable storage medium configured to store a computer program to control a photoelectric conversion system configured to have:
a photoelectric conversion element configured to generate photon detection signals by avalanche multiplication;
a counter circuit configured to count photon detection signals that are output from the photoelectric conversion element; and
a timing generation unit configured to generate a pulse signal for increasing a count value for the counter circuit along with the progression of time in a plurality of second exposure periods that are shorter than a first exposure period that corresponds to one frame,
wherein the computer program comprises instructions for executing the following processes:
acquiring state information relating to a state of at least a part or surroundings of the photoelectric conversion system; and
changing, according to the state information that has been acquired by acquiring the state information, a cycle of at least one of the second exposure periods, and a number of the pulse signals that are included in the second exposure periods.
